# EUROPÄISCHE PATENTANMELDUNG

(11) **EP 3 351 321 A1**
(43) Veröffentlichungstag der Anmeldung: **25.07.2018**
(21) Anmeldenummer: 17152781.5
(22) Anmeldetag: 24.01.2017
(51) Int. Cl.: B22F 3/105, B29C 67/00

(54) **VORRICHTUNG UND VERFAHREN ZUR ADDITIVEN FERTIGUNG WENIGSTENS EINES FORMKÖRPERS**

(71) Anmelder: Siemens Aktiengesellschaft, 80333 München (DE)
(72) Erfinder: Küsters, Yves, 10829 Berlin (DE); Schäfer, Martin, 10557 Berlin (DE)

(57) **Zusammenfassung**

Die Erfindung betrifft eine Vorrichtung (10) sowie ein Verfahren zur additiven Fertigung wenigstens eines Formkörpers (12), mit wenigstens einem Prozessraum (14) zum Aufnehmen eines Materials, aus welchem der Formkörper (12) durch die additive Fertigung herstellbar ist, wobei zumindest ein Teilbereich des Prozessraums (14) durch eine Mehrzahl von relativ zueinander zumindest translatorisch bewegbaren Stabelementen (20, 21) begrenzt ist.

## Beschreibung

Eine solche Vorrichtung und ein solches Verfahren sind bereits aus der EP 1669143 A1 bekannt. Die Vorrichtung dient der additiven Fertigung wenigstens eines Formkörpers und weist wenigstens einen Prozessraum zum Aufnehmen eines Materials auf, aus welchem der Formkörper durch die additive Fertigung herstellbar ist bzw. hergestellt wird.

Aufgabe der vorliegen Erfindung ist es, eine Vorrichtung und ein Verfahren der eingangs genannten Art derart weiterzuentwickeln, dass sich eine besonders vorteilhafte Herstellung des Formkörpers realisieren lässt.

Diese Aufgabe wird durch eine Vorrichtung mit den Merkmalen des Patentanspruchs 1 sowie durch ein Verfahren mit den Merkmalen des Patentanspruchs 14 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zur additiven Fertigung wenigstens eines Formkörpers. Die Vorrichtung weist wenigstens einen Prozessraum zum Aufnehmen eines Materials auf, aus welchem der Formkörper durch die additive Fertigung herstellbar ist bzw. hergestellt wird.

Um nun eine besonders vorteilhafte Herstellung des Formkörpers zu realisieren, ist es erfindungsgemäß vorgesehen, dass zumindest ein Teilbereich des Prozessraums durch eine Mehrzahl von relativ zueinander zumindest translatorisch bewegbaren Stabelementen begrenzt ist.

Bei der additiven Fertigung wird beispielsweise aus dem Material ein Materialbett gebildet, aus welchem der Formkörper hergestellt wird. Beispielsweise ist das Material ein pulverförmiges Material, d.h. ein Pulver, sodass das Materialbett beispielsweise als Pulverbett ausgebildet ist. Somit kann es sich bei der additiven Fertigung um eine pulverbettbasierte additive Fertigung handeln. Bei der additiven Fertigung wird der Formkörper beispielweise mittels selektiver Verfestigung über Strahlenergie, insbesondere eines Laserstrahls, Schicht für Schicht in dem Prozessraum aufgebaut, d.h. hergestellt. Üblicherweise kann der Prozessraum beispielweise das Innere eines sogenannten Bauzylinders oder einer sogenannten Materialbettkammer sein. Üblicherweise werden das Material und somit der Formkörper im Prozessraum auf einer geeigneten Absenkvorrichtung, beispielsweise einer Bauplatte, welche einen Boden des Prozessraums bildet, abgestützt. Beispielsweise nach der Herstellung der jeweiligen Schicht wird die Bauplatte abgesenkt, um dann in dem Prozessraum auf der Bauplatte und somit auf der bereits hergestellten Schicht weiteres Material anzuordnen, aus welchem dann eine weitere Schicht des Formkörpers hergestellt wird. Dadurch ist ein schichtweiser Aufbau des Formkörpers vorgesehen.

Durch Absenken der Bauplatte nimmt beispielsweise während der additiven Fertigung das Volumen des Prozessraums zu. Der Formkörper sinkt sozusagen von Pulver umgeben im Prozessraum ab. Üblicherweise müssen bei der Herstellung des Formkörpers, je nach dessen geometrischer Beschaffenheit, Stützelemente, sogenannte Supportstrukturen, mittels der Strahlenergie aus dem Material hergestellt und somit miterzeugt werden, da das Materialbett nicht immer eine hinreichende Stützfunktion zur Abstützung des Formkörpers während dessen Herstellung gewährt. Des Weiteren kann durch die Strahlenergie ein sehr hoher Temperaturgradient zwischen Pulverbett und Formkörper bzw. auch nur im Formkörper selbst auftreten. Der Temperaturgradient kann zu mechanischen Spannungen im Formkörper führen, welche gegebenenfalls weitere Supportstrukturen nötig machen. Die Supportstrukturen werden üblicherweise mit der Bauplatte bzw. mit einer auf der Bauplatte aufgebrachten Substratplatte verbunden. Mit dieser Substratplatte ist üblicherweise auch der Formkörper selbst verbunden. Da die Supportstrukturen aus dem gleichen Material wie der Formkörper hergestellt werden, bewirken die Supportstrukturen einen erhöhten Materialverbrauch. Somit ist die Herstellung der Supportstrukturen zeit- und kostenaufwändig.

Diese Probleme und Nachteile können nun mittels der erfindungsgemäßen Vorrichtung vermieden werden, da beispielsweise die Stabelemente genutzt werden können, um den Formkörper bei dessen Herstellung bedarfsgerecht abzustützen, ohne das hierfür Supportstrukturen aus dem Material hergestellt werden müssen. Somit kann der Formkörper zeit- und kostengünstig hergestellt werden. Durch den Einsatz der Stabelemente kann der Prozessraum als modularer Prozessraum bzw. als modulare Baukammer ausgestaltet werden, deren innere bzw. innenumfangsseitige Form beispielsweise variiert bzw. bedarfsgerecht eingestellt werden kann, indem die Stabelemente relativ zueinander bewegt werden. Insbesondere können die Stabelemente als einfache Stützstrukturen und/oder zur Beeinflussung des Temperaturgradienten genutzt werden.

Der Prozessraum bzw. dessen Volumen wird beispielsweise teilweise durch einen Boden und teilweise durch wenigstens eine Seitenwand begrenzt. Beispielsweise begrenzt der Boden, häufig eine sogenannte Bauplattform, den Prozessraum in vertikaler Richtung nach unten, wobei die Seitenwand den Prozessraum zumindest teilweise in horizontaler Richtung begrenzt. Somit ist der auch als Baukammer bezeichnete Prozessraum in der Lage, das beispielsweise pulverförmige Material zum Aufbau des Formkörpers zu halten. Üblicherweise weist der Prozessraum die Form eines geraden Kreiszylinders auf.

Erfindungsgemäß ist es nun vorgesehen, dass zumindest ein Teilbereich der Seitenwand und/oder des Bodens durch die Stabelemente gebildet ist. Durch Bewegen der Stabelemente relativ zueinander kann dabei die Form des Prozessraums bedarfsgerecht variiert werden. Wird beispielsweise der Boden komplett aus den Stabelementen gebildet, kann die oben erwähnte Substratplatte und/oder Bauplatte entfallen.

Beispielsweise sind die Stabelemente horizontal und/oder vertikal relativ zueinander bewegbar. Bilden die Stabelemente beispielsweise einen ersten Teilbereich der Seitenwand und/oder des Bodens, wobei die Seitenwand und/oder der Boden wenigstens einen sich an den ersten Teilbereich anschließenden zweiten Teilbereich aufweist, so sind die Stabelemente beispielsweise relativ zueinander und relativ zu dem zweiten Teilbereich, insbesondere zumindest translatorisch, bewegbar. Die Stabelemente sind beispielsweise außenumfangsseitig quader- bzw. spatförmig oder rund ausgebildet.

Als besonders vorteilhat hat es sich gezeigt, wenn die Stabelemente jeweils eine Längserstreckungsrichtung aufweisen und entlang ihrer jeweiligen Längserstreckungsrichtung relativ zueinander translatorisch bewegbar sind. Beispielsweise sind die Stabelemente beweglich an wenigstens einem Lagerelement gelagert und dadurch relativ zueinander und relativ zu dem Lagerelement bewegbar. Durch die Beweglichkeit der Stabelemente ist das Volumen des Prozessraums, über seine stetige Zunahme durch den additiven Fertigungsprozess selbst, variabel. Dadurch kann beispielsweise das Volumen des Prozessraums besonders gering gehalten werden, wodurch bei der Fertigung Material gespart werden kann. Durch die Möglichkeit des Verfahrens der Stabelemente sind diese beispielsweise gesteuert oder geregelt bewegbar, sodass eine genau definierte Form des Prozessraums einstellbar ist, sodass dieser in vorteilhafter Weise an den zu bildenden Formkörper angepasst werden kann.

In vorteilhafter Ausgestaltung der Erfindung ist wenigstens eines der Stabelemente dazu ausgebildet, den Formkörper, zumindest mittelbar abzustützen. Durch die Beweglichkeit des wenigstens einen Stabelements kann dieses, durch geeignete Positionierung relativ zum Formkörper, genutzt werden, um den Formkörper abzustützen. Beispielweise kann dazu das wenigstens eine, als Stützelement fungierende Stabelement direkt zumindest einen Teil des Formkörpers abstützen. Alternativ ist es denkbar, dass das wenigstens eine Stabelement eine indirekte Stützfunktion übernehmen kann, indem beispielsweise auf bzw. an dem wenigstens einen Stabelement wenigstens eine Supportstruktur aus dem Material additiv gefertigt wird, sodass der Formkörper unter Vermittlung der an dem wenigstens einen Stabelement gefertigten Supportstruktur an dem wenigstens einen Stabelement abgestützt wird. Dabei kann der Zeit-, Material- und somit Kostenaufwand zum Fertigen der Supportstruktur an dem wenigstens einen Stabelement gering gehalten werden.

Eine weitere Ausführungsform der Erfindung zeichnet sich dadurch aus, dass zumindest eines der Stabelemente dazu ausgebildet ist, den Formköper zu temperieren. Das zumindest eine Stabelement ist beispielsweise aus einem Werkstoff gebildet, welcher eine Wärmeleitfähigkeit aufweist. Beispielsweise durch die Wärmeleitfähigkeit des Werkstoffes, aus welchem das zumindest eine Stabelement gebildet ist, und durch die Möglichkeit, durch Bewegen des zumindest einen Stabelements einen Abstand zwischen dem zumindest einen Stabelement und dem Formkörper zu verringern oder aufzuheben beispielsweise derart, dass das zumindest eine Stabelement den Formkörper direkt berührt, kann das Stabelement als Wärmebrücke dienen und somit den Formkörper temperieren. Durch eine Temperierung des Formkörpers können beispielweise Spannungen in selbigem, welche bei der Fertigung auftreten können, reduziert oder gering gehalten werden.

Unter dem Temperieren ist zu verstehen, dass zumindest ein Teil des Formkörpers mittels des zumindest einen Stabelements gekühlt und/oder erwärmt bzw. warmgehalten werden kann. Beispielsweise infolge eines Wärmeübergangs von dem Formkörper an das zumindest eine Stabelement kann der Formkörper zumindest teilweise gekühlt werden. Ferner ist es denkbar, den Formkörper zumindest teilweise zu erwärmen, indem ein Wärmeübergang von dem zumindest einen Stabelement an den Formkörper erfolgt.

Bei einer vorteilhaften Ausgestaltung der Erfindung verläuft innerhalb des zumindest einen Stabelements wenigsten ein Kanal, welcher von einem Fluid zum Temperieren des Prozessraums bzw. des Formkörpers durchströmbar ist. Hierdurch kann besonders gut Einfluss auf den Temperaturgradienten im Prozessraum, insbesondere am Formkörper genommen werden.

Eine weitere Ausführungsform zeichnet sich dadurch aus, dass das zumindest eine Stabelement mit wenigstens einem elektrischen Heizelement versehen ist, mittels welchem der Formkörper beheizbar ist. Durch die Möglichkeit, die Stabelemente relativ zueinander und relativ zu dem Formkörper bewegen und somit ausrichten zu können, kann beispielsweise eine zu temperierende Position bedarfsgerecht, insbesondere gesteuert oder geregelt, eingestellt werden, an welcher der Formkörper zu temperieren ist. Dadurch ist der Formkörper besonders spannungsarm fertigbar.

Bei einer vorteilhaften Ausgestaltung der Erfindung ist eine Vibrationseinheit vorgesehen, mittels welcher wenigstens eines der Stabelemente relativ zum Prozessraum in Vibration versetzt werden kann. Durch die Vibration kann eine Kompaktierung des Materials, insbesondere des Pulverbetts, im Prozessraum stattfinden. Durch ein kompakteres Pulverbett werden Gaseinschlüsse in dem Material bzw. Materialbett gering gehalten, wodurch der Bedarf an Supportstrukturen gering gehalten und ein vorteilhafter Wärmeaustausch realisiert werden kann. Des Weiteren steigt mit einem kompakten Pulverbett die Prozessstabilität und es kann darüber hinaus eine besonders hohe Formkörperdichte erreicht werden.

Eine weitere Ausführungsform zeichnet sich dadurch aus, dass mindestens eines der Stabelemente einen Endbereich mit einem in den Prozessraum ragenden freien Ende aufweist, wobei dieser Endbereich in einer Kappe aufgenommen ist. Auf dieser Kappe können lokal Supportstrukturen besonders vorteilhaft erzeugt werden. Ferner kann das mindestens eine Stabelement mittels der Kappe, insbesondere vor Verschleiß und/oder Schäden, geschützt werden, sodass beispielsweise nur die Kappe, jedoch nicht das mindestens eine Stabelemente ausgetauscht werden muss.

In vorteilhafter Ausgestaltung der Erfindung ist die Kappe aus dem gleichen Werkstoff wie das Material, aus welchem der Formkörper durch die additive Fertigung herstellbar ist, gebildet. Durch die Werkstoffgleichheit kann eine vorteilhafte Anbindung bzw. Abstützung des Formkörpers an der Kappe, gegebenenfalls über Supportstrukturen, erreicht werden, wodurch beispielweise eine besonders gute thermische Anbindung des Formkörpers an das Stabelement möglich ist.

In weiterer Ausgestaltung der Erfindung ist mindestens einem der Stabelemente mindestens ein Sensor zugeordnet, mittels welchem auf das mindestens eine Stabelement wirkende Kräfte und/oder Drehmomente erfassbar sind. Dadurch kann beispielweise eine Überwachung des Fertigungsprozesses implementiert werden, sodass eine besonders hohe Prozessstabilität darstellbar ist.

Bei einer vorteilhaften Ausgestaltung der Erfindung ist der Sensor an der Kappe gehalten. Dadurch kann beispielweise eine direktere Rückmeldung von Vorgängen innerhalb des Prozessraums, im Vergleich zu einem am Stabelement angebrachten Sensor, möglich sein, falls das Stabelement mit einer Kappe an seinem in den Prozessraum ragenden freien Ende versehen ist. Ferner kann beispielsweise das Stabelement auf einfache Weise mit unterschiedlichen Sensoren ausgestattet werden, indem Kappen mit unterschiedlichen Sensoren an dem Stabelement angeordnet werden.

Eine weitere Ausführungsform zeichnet sich dadurch aus, dass der Sensor dazu ausgebildet ist, Zugkräfte zu erfassen. Zugkräfte wirken bei der Fertigung des Formkörpers beispielsweise auf Grund der durch die Deponierung der Strahlenergie des Laserstrahls erzeugten Verformung des Formkörpers und den damit einhergehenden Temperaturgradienten. Da die Zugkräfte, gegebenenfalls über Supportstrukturen, auf die Stabelemente übertragen werden können, ist der Sensor eine besonders praktische Möglichkeit, Spannung im Formkörper zu erfassen.

Bei einer vorteilhaften Ausgestaltung der Erfindung ist der Sensor dazu ausgebildet, wenigstens ein die erfassten Kräfte und/oder Drehmomente charakterisierendes, insbesondere elektrisches, Signal bereitzustellen, wobei die Vorrichtung eine elektronische Recheneinheit aufweist, welche dazu ausgebildet ist, das Signal zu empfangen und in Abhängigkeit von dem Signal die Stabelemente zu bewegen. Durch Auswertung des Signals mittels der elektronischen Recheneinheit und durch Verarbeitung dieses Signals durch die Recheneinheit kann beispielweise mindestens eines der Stabelemente so verfahren werden, dass es einem auf ihn wirkenden, gemessenen Krafteinfluss möglichst entgegenwirkt oder kompensiert und so die Effizienz der auf dem Stabelement ausgebildeten Supportstrukturen steigern kann und Verspannungen im Formkörper reduziert werden können. Beispielsweise ist der Sensor als Dehnmessstreifen ausgebildet.

Ein zweiter Aspekt der Erfindung betrifft ein Verfahren zur additiven Fertigung eines Formkörpers, insbesondere mittels einer erfindungsgemäßen Vorrichtung. Bei dem Verfahren wird wenigstens ein Teilbereich eines Prozessraums zum Aufnehmen eines Materials, aus welchem der Formkörper gebildet wird, durch eine Mehrzahl von Stabelementen begrenzt, welche zumindest translatorisch relativ zueinander bewegbar sind bzw. bewegt werden können. Dadurch kann der Formkörper während seines Aufbaus mittels der additiven Fertigung besonders vorteilhaft hergestellt werden. Insbesondere kann eine besonders hohe Qualität des Formkörpers realisiert werden. Vorteilhafte Ausgestaltungen des ersten Aspekts der Erfindung sind als vorteilhafte Ausgestaltungen des zweiten Aspekts der Erfindung anzusehen und umgekehrt.

Ausführungsbeispiele der Erfindung werden nachfolgend anhand schematischer Zeichnungen näher erläutert. Es zeigt:
- FIG 1: eine schematische Perspektivansicht einer ersten Ausführungsform einer erfindungsgemäßen Vorrichtung zur additiven Fertigung eines Formkörpers, wobei zumindest ein Teilbereich eines Prozessraums durch Stabelemente gebildet ist, welche relativ zueinander bewegbar sind;
- FIG 2: eine schematische Perspektivansicht einer zweiten Ausführungsform der Vorrichtung;
- FIG 3: eine schematische und seitliche Perspektivansicht eines Stabelements einer dritten Ausführungsform der Vorrichtung;
- FIG 4: eine schematische und seitliche Perspektivansicht eines Stabelements einer vierten Ausführungsform der Vorrichtung;
- FIG 5: ausschnittweise eine schematische Perspektivansicht einer fünften Ausführungsform der Vorrichtung; und
- FIG 6: ausschnittsweise eine schematische Perspektivansicht einer sechsten Ausführungsform der Vorrichtung.

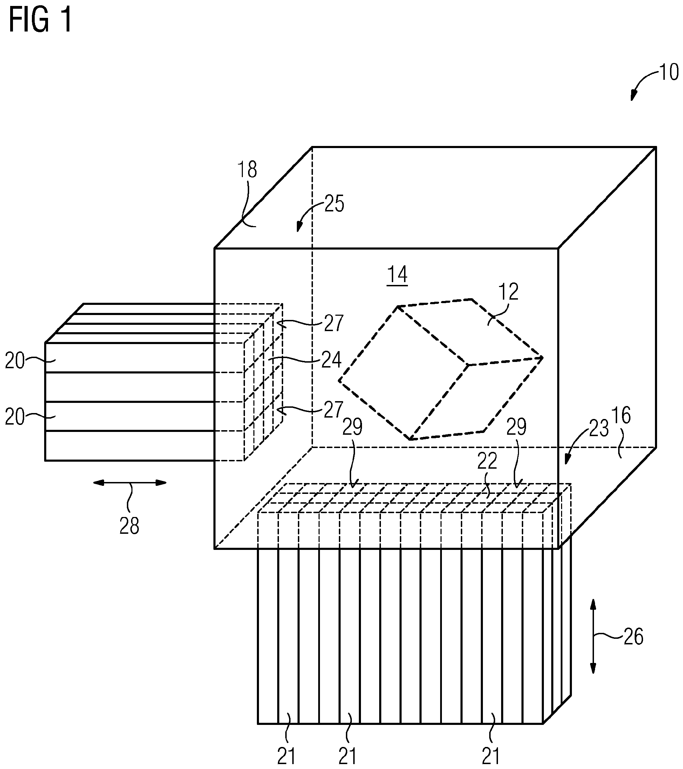

FIG 1 zeigt eine schematische Perspektivansicht einer ersten Ausführungsform einer Vorrichtung 10 zur additiven Fertigung eines Formkörpers 12. Der Formkörper 12 wird in einem Prozessraum 14 hergestellt, welcher durch einen Boden 16 der Vorrichtung 10, insbesondere in vertikaler Richtung, nach unten begrenzt ist. Ferner ist der Prozessraum 14 in horizontaler Richtung zumindest auf einer Seite durch eine Seitenwand 18 der Vorrichtung 10 begrenzt. Dabei wird ein in den Figuren nicht näher dargestelltes Material in dem Prozessraum aufgenommen, wobei der Formkörper 12 aus dem Material durch die additive Fertigung, das heißt mittels eines additiven Fertigungsverfahrens hergestellt wird.

Um nun eine besonders vorteilhafte Herstellung des Formkörpers 12 realisieren zu können, bilden Stabelemente 21, welche hier beispielweise außenumfangsseitig quaderförmig gestaltet sind, einen Teilbereich 22 des Bodens 16. Ferner bilden Stabelemente 20 einen Teilbereich 24 der Seitenwand 18. Dabei weisen die Stabelemente 20 jeweilige Längserstreckungsrichtungen auf, welche hier mit der Horizontalen bzw. mit der horizontalen Richtung zusammenfallen. Außerdem weisen die Stabelemente 21 jeweilige Längserstreckungsrichtungen auf welche mit der Vertikalen bzw. mit der vertikalen Richtung zusammenfallen und dementsprechend senkrecht zur Längserstreckungsrichtung der Stabelemente 20 verlaufen. Die den Teilbereich 22 bildenden Stabelemente 21 sind entlang ihrer jeweiligen Längserstreckungsrichtung und somit in vertikaler Richtung relativ zueinander translatorisch bewegbar.

An den durch die Stabelemente 21 gebildeten Teilbereich 22 schließt sich ein Teilbereich 23 des Bodens 16 an, wobei der Teilbereich 23 den Prozessraum 14 in vertikaler Richtung nach unten teilweise begrenzt. Dabei sind die Stabelemente 21 entlang ihrer jeweiligen Längserstreckungsrichtung relativ zu dem Teilbereich 23 translatorisch bewegbar.

Außerdem sind die den Teilbereich 24 bildenden Stabelemente 20 entlang ihrer jeweiligen Längserstreckungsrichtung relativ zueinander translatorisch bewegbar. An den durch die Stabelemente 20 gebildeten Teilbereich 24 schließt sich ein Teilbereich 25 der Seitenwand 18 an, wobei der Teilbereich 25 den Prozessraum 14 in horizontaler Richtung teilweise begrenzt. Dabei sind die Stabelemente 20 entlang ihrer jeweiligen Längserstreckungsrichtung relativ zu dem Teilbereich 25 translatorisch bewegbar.

Bei der additiven Fertigung wird der Formkörper 12 beispielweise mittels selektiver Verfestigung über Strahlenergie, insbesondere eines Laserstrahls, Schicht für Schicht in dem Prozessraum 14 aufgebaut. Aus dem beispielsweise pulverförmigen Material, insbesondere Metallpulver, werden jeweilige Schichten hergestellt und zumindest teilweise übereinander bzw. aufeinander angeordnet. Üblicherweise wird dazu der gesamte Boden 16 vor oder nach der Herstellung der jeweiligen Schicht des Formkörpers 12 schrittweise abgelassen, wodurch sich der Prozessraum 14 bildet und dessen Volumen zunimmt. Dabei nimmt der Prozessraum 14 das Material, beispielweise Pulver, aus welchem der Formkörper 12 gebildet bzw. hergestellt wird, auf.

Durch Bewegen der Stabelemente 20 und 21 können diese in jeweilige unterschiedliche Positionen bewegt werden. In FIG 1 sind die Positionen der Stabelemente 20 und 21 so, dass sie den Prozessraum 14 derart begrenzen, dass dieser innenumfangsseitig quaderförmig ist. Dabei sind jeweilige, dem Prozessraum 14 zugewandte Stirnseiten 27 der Stabelemente 20 entlang der horizontalen Richtung auf gleicher Höhe und somit bündig zueinander angeordnet. Ferner sind die Stirnseiten 27 entlang der horizontalen Richtung auf gleicher Höhe wie der Teilbereich 25 und somit bündig zu dem Teilbereich 25 angeordnet. Außerdem sind jeweilige, dem Prozessraum 14 zugewandte Stirnseiten 29 der Stabelemente 21 entlang der vertikalen Richtung auf gleicher Höhe und somit bündig zueinander angeordnet. Ferner sind die Stirnseiten 29 entlang der vertikalen Richtung auf gleicher Höhe wie der Teilbereich 23 und somit bündig zu dem Teilbereich 23 angeordnet. Die horizontale Richtung ist eine erste Bewegungsrichtung 28, entlang welcher die Stabelemente 20 translatorisch relativ zueinander und relativ zu dem Teilbereich 25 bewegbar sind. Die vertikale Richtung ist eine zweite Bewegungsrichtung 26, entlang welcher die Stabelemente 21 translatorisch relativ zueinander und relativ zu dem Teilbereich 23 bewegbar sind.

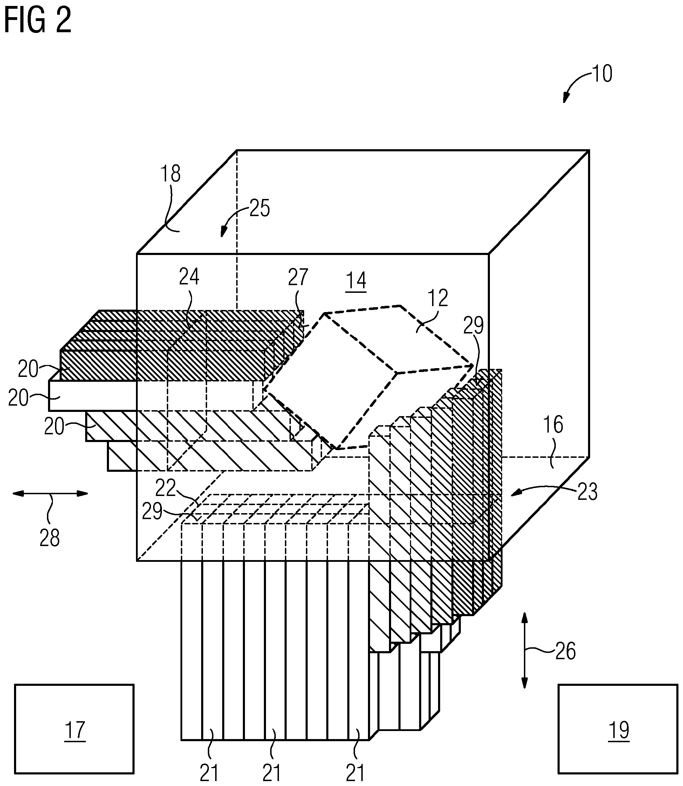

FIG 2 zeigt eine schematische Perspektivansicht einer zweiten Ausführungsform der Vorrichtung 10, welche als Beispiel für eine Konfigurationsmöglichkeit des Prozessraums 14 und seines Volumens dient, wie sie durch vorteilhafte Positionierung der Stabelemente 20 und 21 erreicht werden kann. Hierbei ist zumindest ein Teil der Stabelemente 20 und 21 so entlang ihrer jeweiligen Bewegungsrichtung 26 bzw. 28 verfahren, dass sie möglichst nahe an den Formkörper 12 heran reichen und diesen gegebenenfalls berühren. Hierdurch kann der Formkörper 12 bei seiner Herstellung besonders vorteilhaft abgestützt werden. Ein weiterer Vorteil ist, dass das Volumen des Prozessraums 14 besonders gering gehalten werden kann, wodurch Material, insbesondere Pulver, beim Aufbau des Formkörpers 12 eingespart werden kann.

Die Stabelemente 20 und 21 sind gemäß FIG 2 so angeordnet, dass sie sich entlang der Bewegungsrichtung 26 und/oder 28 gegenseitig überlappen bzw. überdecken. In FIG 2 zeigt sich dies daran, dass ein erster Teil der Stabelemente 21 am Formkörper 12 positioniert sind und diesen berühren und abstützen, währen ein zweiter Teil der Stabelemente 20 in ihrer Grundposition verharren, d. h. der zweite Teil ist so positioniert, dass die jeweiligen Stirnseiten 29 des zweiten Teils in einer gemeinsamen Ebene mit dem Teilbereich 23 liegen. Dabei kann es sinnvoll sein, die Stabelemente 20 und 21 möglichst nahe an den Formkörper heranzufahren, um dadurch das Volumen des Prozessraums möglichst gering zu halten, wodurch Material eingespart werden kann.

Insgesamt ist erkennbar, dass die Stabelemente 20 und 21 als Stützelemente und somit als sogenannte Supportstrukturen fungieren können, mittels welchen der Formkörper 12 zumindest mittelbar abstützbar ist. Je nach Form des Formkörpers 12 kann es vorteilhaft sein, dass zumindest ein Teil der Stabelemente 20 und/oder zumindest ein Teil der Stabelemente 21 an dem Formkörper 12 positioniert werden und diesen zumindest mittelbar abstützen.

Ferner ist es denkbar, dass zumindest eines der Stabelemente 20 und/oder 21 dazu ausgebildet ist, den Formkörper 12 zu temperieren, das heißt zu kühlen und/oder zu erwärmen. Hierzu verläuft in dem zumindest einen Stabelement ein in FIG 2 nicht sichtbarer Kanal, welcher von einem Fluid zum Temperieren des Formkörpers 12 durchströmbar ist. Das Fluid kann beispielsweise mittels einer Temperiereinrichtung temperiert, das heißt gekühlt und/oder erwärmt werden. Beispielsweise infolge eines Wärmeübergangs von dem Fluid an das zumindest eine Stabelement wird das zumindest eine Stabelement erwärmt. Dann kann ein Wärmeübergang von dem zumindest einen Stabelement an den Formkörper 12 erfolgen, wodurch der Formkörper 12 erwärmt wird.

Beispielsweise kann ferner ein Wärmeübergang von dem Formkörper 12 über das zumindest eine Stabelement an das Fluid erfolgen, wodurch der Formkörper 12 gekühlt und das Fluid erwärmt wird. Dann kann das Fluid beispielsweise mittels der Temperiereinrichtung wieder gekühlt werden.

Alternativ oder zusätzlich ist es denkbar, dass das zumindest eine Stabelement mit wenigstens einem insbesondere elektrischen Heizelement 17 versehen ist, mittels welchem der Formkörper 12, insbesondere über das zumindest eine Stabelement, beheizt werden kann. Insbesondere ist es denkbar, mehrere der oder alle Stabelemente 20 bzw. 21 temperieren zu können, um dadurch den Formkörper 12 besonders vorteilhaft temperieren zu können. Somit kann beispielsweise eine Temperatur des Formkörpers 12 besonders vorteilhaft eingestellt, insbesondere geregelt oder gesteuert, werden. Hierdurch kann der Formkörper 12 beispielweise besonders stark und schnell abgekühlt werden. Dadurch ist es beispielweise möglich, den Formkörper 12 besonders schnell aus der Vorrichtung 10 zu entfernen und damit einen besonders hohen Durchsatz, d. h. eine besonders hohe Stückzahl pro Zeitintervall zu ermöglichen. Hierdurch kann eine besonders hohe Produktivität realisiert werden, und die Kosten können besonders gering gehalten werden.

Insbesondere ist ein gleichzeitiges Erwärmen und Abkühlen denkbar. Dabei wird beispielsweise ein jeweiliger erster Teilbereich des Formkörpers 12 mittels eines ersten Teils der Stabelemente 20 und/oder 21 erwärmt, während ein jeweiliger, von dem ersten Teilbereich unterschiedlicher zweiter Teilbereich des Formkörpers 12 mittels eines zweiten Teils der Stabelemente 20 und/oder 21 gekühlt wird. Bezogen auf die Stabelemente 21 ist es beispielsweise vorgesehen, dass je weiter unten sich ein Stabelement 21 befindet, desto geringer ist seine Temperatur eingestellt und ein jeweiliger, sich in der Nähe des jeweiligen Stabelements 21 befindender Teil des Formkörpers 12 kühlt entsprechend schneller ab bzw. wird weniger stark erwärmt. Dadurch kann ein vorteilhafter Temperaturgradient des Formkörpers 12 und/oder im Prozessraum 14 eingestellt werden. Dadurch kann bei entsprechender Temperierung der einzelnen Stabelemente 20 und/oder 21 ein besonders hoher oder geringer Temperaturgradienten am Formkörper 12 und/oder im Prozessraum 14 realisiert werden. Hierdurch können beispielsweise übermäßige Spannungen im Formkörper 12 vermieden werden. Je nach Art und Form des durch die additive Fertigung zu bildenden Formkörpers 12 kann durch die Vorrichtung 10 der Temperaturgradient bedarfsgereicht eingestellt werden. In FIG 2 sind unterschiedliche Temperaturen der jeweiligen, temperierten Stabelemente 20 bzw. 21 durch unterschiedliche Schraffuren dargestellt. Je enger die Striche der Schraffur, desto höher ist die Temperatur am Stabelement 20 bzw. 21 eingestellt. Keine Schraffur bedeutet, dass an diesem Stabelement 20 bzw. 21 die Temperatur im Beispiel nicht geregelt bzw. nicht aktiv eingestellt wird.

Die Vorrichtung 10 umfasst ferner eine Vibrationseinheit 19, welche die Stabelemente 20 und/oder 21, entlang ihrer jeweiligen translatorischen Bewegungsrichtung, derart in Bewegung versetzten kann, dass diese Stabelemente vibrieren. Somit kann das Material, insbesondere Metallpulver, welches für die Herstellung des Formkörpers 12 verwendet wird, verfestigt bzw. kompaktiert werden.

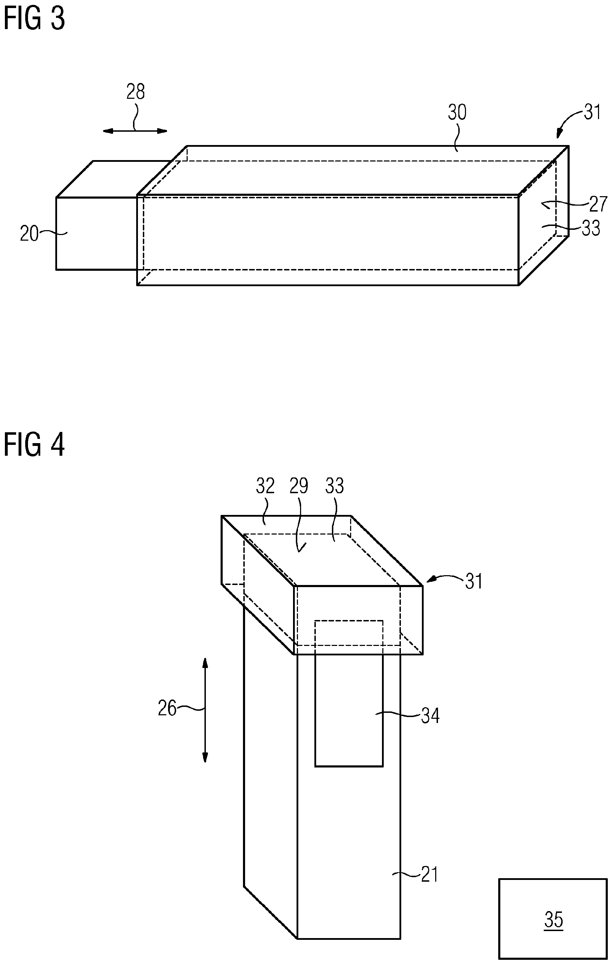

FIG 3 zeigt eine schematische und seitliche Perspektivansicht eines der Stabelemente 20, welches entlang der horizontalen Bewegungsrichtung 28 translatorisch bewegbar ist, einer dritten Ausführungsform der Vorrichtung. Das Stabelement 20, ist zumindest überwiegend von einer Kappe 30 eingefasst, das heißt in der Kappe 30 aufgenommen.

FIG 4 zeigt eine schematische und seitliche Perspektivansicht eines der Stabelemente 21 für eine vierte Ausführungsform, welches entlang der vertikalen Bewegungsrichtung 26 translatorisch bewegbar ist. Das Stabelement 21 weist dabei einen Endbereich 31 mit einem in den Prozessraum 14 ragenden freien Ende 33 auf, wobei der Endbereich 31 in einer Kappe 32 aufgenommen ist. Außerdem ist dem Stabelement 21 gemäß FIG 4 ein Sensor 34 zugeordnet, welcher an dem Stabelement 21 angeordnet bzw. gehalten ist. Dieser Sensor 34 ist hier beispielhaft als Dehnmessstreifen ausgebildet und kann Zugkräfte, welche auf das Stabelement 20 wirken, erfassen. Es ist vorteilhaft den Sensor 34 so zu gestalten, dass er besonders leicht ausgewechselt, d. h. leicht an das oder vom Stabelement montiert werden kann und dabei trotzdem eine besonders gute Anbindung an das Stabelement hat, beispielweise durch ein aufgelötetes Plättchen.

Der Sensor 34 dient insbesondere dazu, Kräfte bzw. Drehmomente, welche auf das jeweilige Stabelement 20 und/oder 21 wirken, zu erfassen. Dabei stellt der Sensor 34 beispielsweise ein die erfassten Kräfte bzw. Drehmomente charakterisierendes, insbesondere elektrisches, Signal bereit. Beispielsweise ist eine elektronische Recheneinheit 35 vorgesehen, welche mit dem Sensor 34 derart verbunden ist, das die Recheneinheit 35 das Signal empfangen kann. In der Folge können beispielsweise die Stabelemente 20 und 21 mittels der Recheneinheit 35 in Abhängigkeit von dem Signal entlang der jeweiligen Bewegungsrichtung 26 bzw. 28 bewegt werden. Ferner ist es denkbar, dass der Sensor 34 an der Kappe 32 gehalten ist, sodass der Sensor 34 beispielsweise mit der Kappe 32 austauschbar ist. Alternativ kann der Sensor 34 dazu ausgebildet sein, eine Temperatur des jeweiligen Stabelements 20 bzw. 21 und/oder des Formkörpers 12 zu erfassen und wenigstens ein die erfasste Temperatur charakterisierendes, insbesondere elektrisches, Signal bereitzustellen. Dadurch kann beispielsweise der Formkörper 12 mittels der Recheneinheit 35 in Abhängigkeit von dem Signal temperiert werden.

Die in FIG 3 und FIG 4 gezeigten Kappen 30 und 32 können das jeweils von ihnen abgedeckte Stabelement 20 bzw. 21 vor Verschmutzung und Verschleiß schützen. Beispielsweise ist der Formkörper 12 über die Kappen 30 und 32 an den Stabelementen 20 und 21 abstützbar. Die Kappen 30 und 32 sind in vorteilhafter Ausgestaltung so ausgebildet, dass sie am Stabelement 20 bzw. 21 leicht ausgewechselt werden können, um beispielweise eine schnelle Reinigung des Prozessraums 14 zu ermöglichen und/oder dass die Kappen 30 und/oder 32 an einen neuen Werkstoff für den zu bildenden Formkörper 12 angepasst werden können.

Es kann beispielweise bei der Herstellung des Formkörpers 12 von Vorteil sein, wenn die Kappen 30 und 32 aus dem gleichen Werkstoff wie der Formkörper 12 selbst bzw. aus dem gleichen Werkstoff wie das Material gebildet sind. Dadurch können beispielweise Supportstrukturen, welche den Formkörper 12 abstützen sollen, aus dem Material, insbesondere durch additive Fertigung, hergestellt und besonders stabil an die jeweilige Kappe 30 und/oder 32 und somit an das jeweilige Stabelement 20 und/oder 21 angebunden werden.

Ist bei der Herstellung des Formkörpers 12 beispielweise eine besonders effektive Abfuhr von Temperatur aus dem Prozessraum 14 wünschenswert, kann es vorteilhaft sein, Kappen 30 und/oder Kappen 32 aus einem Material mit einem besonders hohen Wärmeleitkoeffizient zu verwenden. Ferner ist es denkbar, die Kappen 30 und/oder 32 aus einem besonders kostengünstigen Werkstoff herzustellen. Auch können bei der additiven Fertigung eines bestimmten Formkörpers 12 unterschiedliche Stabelemente 20 und/oder 21 durch Kappen 30 und/oder 32 aus jeweils unterschiedlichen Werkstoffen abgedeckt sein, um die oben genannten Vorteile zu kombinieren.

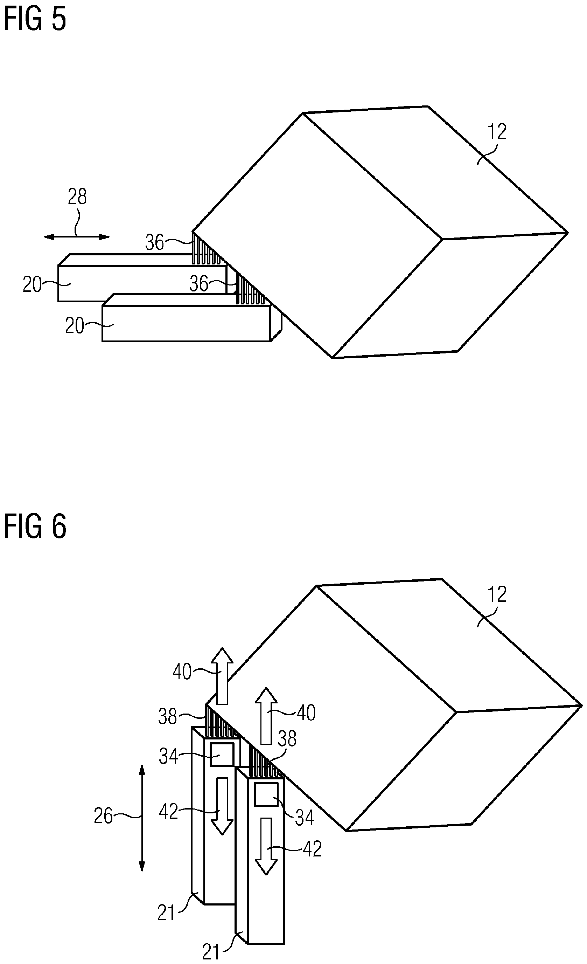

Im Vergleich der beiden Kappen 30 und 32, zeigt sich, dass die Kappe 30 einen größeren Bereich des Stabelements abdeckt als die Kappe 32. Die Kappen 32 können relativ kurz gehalten werden, wenn beispielweise die Vorrichtung 10 so betrieben wird, dass Supportstrukturen 38 (FIG 6) an den Stabelementen 21 nur auf deren Stirnseiten 29 angeordnet werden. Dadurch kann die Menge des Materials aus dem die Kappe 32 gefertigt ist, und somit die Kosten gering gehalten werden.

FIG 5 zeigt ausschnittweise eine schematische Perspektivansicht einer fünften Ausführungsform der Vorrichtung 10. An den gezeigten Stabelementen 20, welche entlang der horizontalen Bewegungsrichtung 28 translatorisch bewegbar sind, sind Supportstrukturen 36 angebracht, welche den Formkörper 12, insbesondere direkt, abstützen.

FIG 6 zeigt ausschnittweise eine schematische Perspektivansicht einer sechsten Ausführungsform der Vorrichtung 10. An den gezeigten Stabelementen 21, welche in vertikaler Bewegungsrichtung 26 translatorisch bewegbar sind, sind die bereits genannten Supportstrukturen 38 angebracht, welche den Formkörper 12 abstützen.

Die in FIG 5 und FIG 6 gezeigten Supportstrukturen 36 und 38 dienen dazu, den Formkörper 12 während der additiven Fertigung abzustützen. Mithilfe der Supportstrukturen 36 und/oder 38 kann somit einer Verformung des Formkörpers bei der Herstellung entgegengewirkt werden. Dazu werden die Supportstrukturen 36 und 38 während der additiven Fertigung, wie der Formkörper selbst, im Prozessraum 14 aus dem Material, aus welchem auch der Formkörper 12 hergestellt wird, durch die additive Fertigung bzw. das additive Fertigungsverfahren hergestellt. Um dies besonders kosteneffizient zu realisieren, sind die Stabelemente 20 beispielweise nahe am Formkörper 12 zu platzieren. Dadurch kann Material eingespart werden, da die Supportstrukturen 36 und 38 besonders kompakt ausgestaltet werden können.

Beispielweise kann es während der Fertigung des Formkörpers 12, beispielweise durch einen Temperaturgradient, zu Spannungen in dem Formkörper 12 kommen Diese Spannungen können mittels der Sensoren 34 erfasst werden. Die Spannungen in dem Formkörper 12 führen beispielsweise zu auf die Stabelemente 20 wirkenden Kräften bzw. Drehmomenten, die mittels der Sensoren 34 erfasst werden können. Diese mittels der Sensoren 34 erfassbaren Kräfte sind in FIG 6 durch Kraftpfeile 40 veranschaulicht. Die Supportstrukturen 38 können nun besonders vorteilhaft verwendet werden, um den übertragenen Kräften und somit den Spannungen entgegenzuwirken, was in FIG 6 Kraftpfeile 42 veranschaulicht ist. Somit kann eine unerwünschte, übermäßige Verformung des Formkörpers 12 besonders effizient vermieden werden.

## Patentansprüche

1. Vorrichtung (10) zur additiven Fertigung wenigstens eines Formkörpers, mit wenigstens einem Prozessraum (14) zum Aufnehmen eines Materials, aus welchem der Formkörper (12) durch die additive Fertigung herstellbar ist,
**dadurch gekennzeichnet, dass** zumindest ein Teilbereich des Prozessraums (14) durch eine Mehrzahl von relativ zueinander zumindest translatorisch bewegbaren Stabelementen (20, 21) begrenzt ist.

2. Vorrichtung (10) nach Anspruch 1,
**dadurch gekennzeichnet, dass**
die Stabelemente (20, 21) eine jeweilige Längserstreckungsrichtung aufweisen und entlang ihrer jeweiligen Längserstreckungsrichtung relativ zueinander translatorisch bewegbar sind.

3. Vorrichtung (10) nach Anspruch 1 oder 2,
**dadurch gekennzeichnet, dass** wenigstens eines der Stabelemente (20, 21) dazu ausgebildet ist, den Formkörper (12) zumindest mittelbar abzustützen.

4. Vorrichtung (10) nach einem der vorhergehenden Ansprüche,
**dadurch gekennzeichnet, dass** zumindest eines der Stabelemente (20, 21) dazu ausgebildet ist, den Formkörper (12) zu temperieren.

5. Vorrichtung (10) nach Anspruch 4,
**dadurch gekennzeichnet, dass** innerhalb des zumindest einen Stabelements (20, 21) wenigstens ein Kanal verläuft, welcher von einem Fluid zum Temperieren des Formkörpers durchströmbar ist.

6. Vorrichtung (10) nach Anspruch 4 oder 5,
**dadurch gekennzeichnet, dass**
das zumindest eine Stabelement (20, 21) mit wenigstens einem Heizelement (17), insbesondere mit wenigstens einem elektrischen Heizelement, versehen ist, mittels welchem der Formkörper (12) beheizbar ist.

7. Vorrichtung (10) nach einem der vorhergehenden Ansprüche,
**dadurch gekennzeichnet, dass**
eine Vibrationseinheit (19) vorgesehen ist, mittels welcher wenigstens eines der Stabelemente (20, 21) relativ zum Prozessraum in Vibration versetzbar ist.

8. Vorrichtung (10) nach einem der vorhergehenden Ansprüche,
**dadurch gekennzeichnet, dass** mindestens eines der Stabelemente (20, 21) einen Endbereich (31) mit einem in den Prozessraum ragenden freien Ende (33) aufweist, wobei der Endbereich (31) in einer Kappe (30, 32) aufgenommen ist.

9. Vorrichtung (10) nach Anspruch 8,
**dadurch gekennzeichnet, dass**
die Kappe (30, 32) aus dem gleichen Werkstoff wie das Material, aus welchem der Formkörper (12) durch die additive Fertigung herstellbar ist, gebildet ist.

10. Vorrichtung (10) nach einem der vorhergehenden Ansprüche,
**dadurch gekennzeichnet, dass** mindestens einem der Stabelemente (20, 21) mindestens ein Sensor (34) zugeordnet ist, mittels welchem auf das mindestens eine Stabelement (20, 21) wirkende Kräfte und/oder Drehmomente erfassbar sind.

11. Vorrichtung (10) nach Anspruch 10 in dessen Rückbezug auf Anspruch 8 oder 9,
**dadurch gekennzeichnet, dass** der Sensor (34) an der Kappe (30, 32) gehalten ist.

12. Vorrichtung (10) nach Anspruch 10 oder 11,
**dadurch gekennzeichnet, dass**
der Sensor (34) dazu ausgebildet ist, Zugkräfte zu erfassen.

13. Vorrichtung (10) nach einem der Ansprüche 10 bis 12,
**dadurch gekennzeichnet, dass**
der Sensor (34) dazu ausgebildet ist, wenigstens ein die erfassten Kräfte und/oder Drehmomente charakterisierendes, insbesondere elektrisches, Signal bereitzustellen, wobei die Vorrichtung (10) eine elektronische Recheneinheit (35) aufweist, welche dazu ausgebildet ist, das Signal zu empfangen und in Abhängigkeit von dem Signal die Stabelemente (20, 21) zu bewegen.

14. Verfahren zur additiven Fertigung wenigstens eines Formkörpers (12), bei welchem der Formkörper (12) aus einem in einem Prozessraum (14) aufgenommenem Material durch die additive Fertigung hergestellt wird,
**dadurch gekennzeichnet, dass** zumindest ein Teilbereich des Prozessraums (14) durch eine Mehrzahl von Stabelementen (20, 21) begrenzt wird, welche zumindest translatorisch relativ zueinander bewegt werden.
